# EUROPÄISCHE PATENTSCHRIFT

(11) **EP 2 994 340 B1**
(45) Veröffentlichungstag und Bekanntmachung des Hinweises auf die Patenterteilung: **07.12.2016**
(21) Anmeldenummer: 14720048.9
(22) Anmeldetag: 25.04.2014
(51) Int. Cl.: B60L 11/18, H02J 7/02, H02J 3/26

(54) **VERFAHREN ZUM BETRIEB EINER LADEVORRICHTUNG FÜR DAS EIN- UND MEHRPHASIGE LADEN EINES ENERGIESPEICHERS EINES KRAFTFAHRZEUGS UND LADEVORRICHTUNG**
OPERATING METHOD OF CHARGING DEVICE FOR SINGLE AND MULTIPHASE CHARGING OF ENERGY STORAGE DEVICE OF VEHICLE AND CHARGING DEVICE
PROCÉDÉ POUR FAIRE FONCTIONNER UN DISPOSITIF DE CHARGE POUR ASSURER LA CHARGE MONOPHASÉE ET POLYPHASÉE D'UN ACCUMULATEUR D'ÉNERGIE D'UN VÉHICULE À MOTEUR ET DISPOSITIF DE CHARGE

(30) Priorität: 10.05.2013 DE 102013007971
(43) Veröffentlichungstag der Anmeldung: 16.03.2016
(73) Patentinhaber: Audi AG, 85045 Ingolstadt (DE)
(72) Erfinder: ZAKI, Sami, Robert, Hallertau 93326 Abensberg (DE)
(74) Vertreter: Lehle, Josef
(86) Internationale Anmeldenummer: PCT/EP2014/001114
(87) Internationale Veröffentlichungsnummer: WO 2014/180539

(56) Entgegenhaltungen:
- WO-A2-2010/091743
- WO-A2-2012/128626
- DE-A1-102009 060 364
- US-A1- 2009 189 456

## Beschreibung

Die Erfindung betrifft ein Verfahren zum Betrieb einer Ladevorrichtung eines Energiespeichers eines Kraftfahrzeugs, wobei beim mehrphasigen Laden durch die Ladevorrichtung für jede Phase eine Gleichrichtervorrichtung zur Erzeugung einer Ladespannung für den Energiespeicher eingesetzt wird und beim einphasigen Laden durch die Ladevorrichtung nur eine Gleichrichtervorrichtung aktiv ist. Daneben betrifft die Erfindung eine Ladevorrichtung für einen Energiespeicher eines Kraftfahrzeugs, die eine Steuereinrichtung und für jede einer Phase zugeordnete Anschlussleitung eine Gleichrichtervorrichtung zur Erzeugung einer Ladespannung für den Energiespeicher aufweist, wobei eine erste Anschlussleitung, die mit einer ersten Gleichrichtervorrichtung verbunden ist, beim einphasigen Laden nutzbar ist.

In letzter Zeit wurden Kraftfahrzeuge vorgeschlagen, die einen größere Energiemengen zur Verfügung stellenden elektrischen Energiespeicher aufweisen, dessen Energie beispielsweise wenigstens teilweise in Antriebsenergie für das Kraftfahrzeug umgewandelt werden kann, wie dies bei Hybrid- und Elektrokraftfahrzeugen bekannt ist. Um derartige elektrische Energiespeicher eines Kraftfahrzeugs aufladen zu können, sind Ladevorrichtungen bekannt, deren hauptsächliche Aufgabe es ist, die an wenigstens einer Anschlussleitung zur Verfügung gestellte elektrische Leistung in eine zum Laden des Energiespeichers geeignete Ladespannung, die eine Gleichspannung ist, umzuwandeln. Dabei wurden auch Ladevorrichtungen bekannt, die für mehrphasige elektrische Leistungen einsetzbar sind, mithin beispielsweise ein zweiphasiges oder dreiphasiges Laden ermöglichen. Dabei wird üblicherweise jeder Phase eine Anschlussleitung und eine Gleichrichtervorrichtung zugeordnet.

Es ist gewünscht, dass zum mehrphasigen Laden geeignete Ladevorrichtungen auch für einen Einphasenbetrieb geeignet sein sollen, damit Nutzer von Kraftfahrzeugen auch an einer einphasigen Infrastruktur den Energiespeicher aufladen können, mithin einphasige elektrische Leistung nutzen können. Bekannte Ladevorrichtungen des Standes der Technik sind dabei so ausgebildet, dass eine erste Anschlussleitung, die mit einem ersten Gleichrichter verbunden ist, für das einphasige Laden verwendet wird. Wird nur an der ersten Anschlussleitung eine anliegende Spannung detektiert, beispielsweise über eine geeignete Spannungsmessvorrichtung, an den anderen, zweiten Anschlussleitungen für die übrigen Phasen jedoch nicht, wird nur der an der ersten Anschlussleitung angeschlossene erste Gleichrichter betrieben, um den Ladevorgang durchzuführen.

Nachdem eine Ladevorrichtung auf eine gewisse Lebensdauer ausgelegt wird, besteht mithin bei den aus dem Stand der Technik bekannten Ladevorrichtungen für eine der Gleichrichtervorrichtungen eine erhöhte Lebensdaueranforderung, welche zu höheren Kosten für die Ladevorrichtung insgesamt führt.

Es sei an dieser Stelle noch angemerkt, dass der Begriff der Gleichrichtervorrichtung diese nicht nur auf eine Gleichrichterfunktion einschränkt, sondern Module für die unterschiedlichen Phasen beschreibt, die selbstverständlich neben einem Gleichrichter auch andere elektrische Komponenten umfassen können, beispielsweise Filter, insbesondere Leistungsfaktorkorrekturfilter und dergleichen. Auch kann eine Gleichrichtervorrichtung als Modul insgesamt mehrere Gleichrichterstufen WO2012128626 offenbart ein Verfahren zum Betrieb eines Energiespeichers für ein Kraftfahrzeug, wobei beim mehrphasigen Laden durch die Ladevorrichtung für jede Phase eine Gleichrichtervorrichtung zur Erzeugung einer Ladespannung eingesetzt wird und beim einphasigen Laden nur eine Gleichrichtervorrichtung aktiv ist.

Der Erfindung liegt daher die Aufgabe zugrunde, ein Verfahren zum Betrieb einer Ladevorrichtung und eine Ladevorrichtung anzugeben, die aufgrund homogenerer Lebensdaueranforderungen kostengünstiger realisierbar sind. Zur Lösung dieser Aufgabe ist bei einem Verfahren der eingangs genannten Art erfindungsgemäß vorgesehen, dass für jede Gleichrichtervorrichtung eine deren bisherige Nutzung beschreibende Nutzungsgröße ermittelt wird, wobei bei einem einphasigen Ladevorgang die bislang am wenigsten genutzte Gleichrichtervorrichtung für den Ladevorgang genutzt wird.

Die Nutzungsgröße, welche bevorzugt eine Betriebsdauer oder eine bislang verrichtete Arbeit der Gleichrichtervorrichtung ist, kann dabei durch eine Zähleinrichtung erfasst werden, beispielsweise einen Betriebsstundenzähler oder einen Wattstundenzähler. Wird die Nutzungsgröße entsprechend vorgehalten, ist es möglich, diese zu berücksichtigen und in Abhängigkeit der Nutzungsgröße eine weitgehend gleichmäßige Gesamtnutzung der Gleichrichtervorrichtungen über die Lebenszeit der Ladevorrichtung zu realisieren. Dies wird dadurch erreicht, dass für einen einphasigen Ladevorgang immer die bislang am wenigsten genutzte Gleichrichtervorrichtung eingesetzt wird, mithin die die geringste Nutzung anzeigende Nutzungsgröße aufweisende Gleichrichtervorrichtung. Hierzu kann eine das erfindungsgemäße Verfahren durchführende Steuereinrichtung eine entsprechende Vergleichseinrichtung aufweisen. Erkennt also die Steuereinrichtung, beispielsweise anhand von Spannungsmessungen an den Anschlussleitungen für die verschiedenen Phasen, dass nur an einer Anschlussleitung Spannung zur Verfügung steht, mithin ein einphasiges Laden vorzunehmen ist, wertet sie die Nutzungsgrößen der Gleichrichtervorrichtungen aus und wählt die Gleichrichtervorrichtung, deren Nutzungsgröße die geringste Nutzung anzeigt, beispielsweise also den geringsten Wert für Betriebsstunden oder Leistung, welche dann für den Ladevorgang eingesetzt wird, selbstverständlich unter Aktualisierung der Nutzungsgrößen, so dass mithin "mitgezählt" wird. Die anderen Gleichrichtervorrichtungen bleiben inaktiv.

Auf diese Weise wird eine Gleichverteilung der Nutzung auf alle Gleichrichtervorrichtungen (Module) erreicht, so dass eine kostengünstigere Auslegung der Ladevorrichtung erfolgen kann.

Dabei sei an dieser Stelle angemerkt, dass es im erfindungsgemäßen Verfahren durchaus auch denkbar ist, die Nutzungsgrößen während eines aktiven Ladevorgangs auszuwerten und gegebenenfalls dann, wenn eine andere Gleichrichtervorrichtung eine um einen bestimmten Wert niedrigere Nutzungsgröße während des Ladevorgangs aufweist, auf diese andere Gleichrichtervorrichtung zur Nutzung umzuschalten, um einen noch besseren Ausgleich zu erreichen. Dies ist aber weniger bevorzugt, da dann während des einphasigen Ladevorgangs Umschaltvorgänge vorgenommen werden müssten.

In konkreter Ausgestaltung der Erfindung kann vorgesehen sein, dass eine mit einer für das einphasige Laden genutzten ersten Anschlussleitung verbundene erste Gleichrichtervorrichtung und eine Schaltvorrichtung zum bedarfsweisen Verbinden der wenigstens einen zweiten, nicht der ersten Gleichrichtervorrichtung entsprechenden Gleichrichtervorrichtung mit der ersten Anschlussleitung verwendet werden, wobei zu Beginn jedes Ladevorgangs bei einer am wenigsten genutzten zweiten Gleichrichtervorrichtung ein die zweite Gleichrichtervorrichtung mit der Anschlussleitung verbindender Schalter der Schaltvorrichtung geschlossen wird und die erste Gleichrichtervorrichtung deaktiviert wird. Das bedeutet also, dass die zweiten Gleichrichtervorrichtungen über Schalter der Schaltvorrichtung auch an die erste Anschlussleitung, die die elektrische Leistung beim einphasigen Laden zuführt, angeschlossen werden können. Soll also mit einer nicht bereits von Haus aus mit der ersten Anschlussleitung verbundenen zweiten Gleichrichtervorrichtung geladen werden, kann der entsprechende Schalter geschlossen werden, so dass eine Verbindung zur ersten Anschlussleitung vorliegt. Die erste Gleichrichtervorrichtung wird entsprechend deaktiviert, also inaktiv geschaltet, und stellt keine Leistung für den Energiespeicher zur Verfügung. Stattdessen wird die Funktion der ersten Gleichrichtervorrichtung durch die über den entsprechenden Schalter zugeschaltete zweite Gleichrichtervorrichtung übernommen. Die Ansteuerung der Schaltvorrichtung und der Gleichrichtervorrichtungen kann dann entsprechend auch über die Steuereinrichtung erfolgen.

Als Schalter bieten sich hierbei besonders ein Relais oder ein Halbleiterschalter an. Derartige Schalter sind in der Leistungselektronik bekannt und können auch beim vorliegenden Verfahren vorteilhaft eingesetzt werden.

Dabei sei an dieser Stelle noch angemerkt, dass in die Schalter auch weitere Funktionen integriert sein können, wie dies im Stand der Technik grundsätzlich bekannt ist. Beispielsweise kann vorgesehen sein, dass die Schalter wenigstens eine Gleichrichterstufe und/oder wenigstens ein Leistungsfaktorkorrekturfilter aufweisen.

Wie bereits angedeutet wurde, sieht eine Weiterbildung der vorliegenden Erfindung vor, dass zur Unterscheidung zwischen einem einphasigen und einem mehrphasigen Laden an allen Anschlussleitungen eine Spannungsmessung vorgenommen wird. Dies kann über geeignete Spannungsmesseinrichtungen an den Anschlussleitungen erfolgen, die ihre Messwerte an die Steuereinrichtung liefern, welche sie entsprechend auswertet. Wird nur an der ersten Anschlussleitung eine Spannung festgestellt, ist von einem einphasigen Laden auszugehen, wird an allen Anschlussleitungen eine Spannung festgestellt, ist das übliche mehrphasige Laden durchzuführen.

In weiterer vorteilhafter Ausbildung der Erfindung kann vorgesehen sein, dass bei einer für dreiphasiges Laden ausgebildeten Ladevorrichtung bei einem zweiphasigen Laden die zwei die bislang niedrigste Nutzung anzeigende Nutzungsgröße aufweisenden Gleichrichtervorrichtungen für den Ladevorgang genutzt werden. Bei einer zum dreiphasigen Laden ausgebildeten Ladevorrichtung muss das erfindungsgemäße Verfahren, welches auf einer Angleichung der Nutzung der Gleichrichtervorrichtungen zielt, nicht auf einphasiges Laden beschränkt sein, sondern es kann, wenn auch die Option zum zweiphasigen Laden besteht, eine entsprechende Erweiterung erfolgen, wobei entsprechende Schaltvorrichtungen für in diesem Fall zwei erste Anschlussleitungen realisiert werden können.

Neben dem Verfahren betrifft die Erfindung auch eine Ladevorrichtung, wobei sich eine erfindungsgemäße Ladevorrichtung, wie sie eingangs beschrieben wurde, dadurch auszeichnet, dass die Ladevorrichtung für jede Gleichrichtervorrichtung eine Zähleinrichtung für eine deren bisherige Nutzung beschreibende Nutzungsgröße aufweist, wobei die Steuereinrichtung bei einem einphasigen Ladevorgang zur Nutzung der gemäß der Inhalte der Zählvorrichtungen bislang am wenigstens genutzten Gleichrichtervorrichtung für den Ladevorgang ausgebildet ist. Dabei kann die Zählvorrichtung, wie bereits dargelegt wurde, zur Erfassung einer Betriebsdauer oder einer verrichteten Arbeit als Nutzungsgröße ein Betriebsstunden- oder Wattstundenzähler sein. Sämtliche Ausführungen bezüglich des erfindungsgemäßen Verfahrens lassen sich analog auf die erfindungsgemäße Ladevorrichtung übertragen, mit welcher mithin auch die genannten Vorteile ermöglicht.

Insbesondere ist es in konkreter Ausgestaltung also möglich, dass eine durch die Steuereinrichtung ansteuerbare Schaltvorrichtung zum bedarfsweisen Verbinden der wenigstens einen zweiten, nicht der ersten Gleichrichtervorrichtung entsprechenden Gleichrichtervorrichtung mit der ersten Anschlussleitung vorgesehen ist. Es kann dann eine entsprechende Ansteuerung der Schalteinrichtung und der Gleichrichtervorrichtungen, wie beschrieben, erfolgen, wenn eine zweite Gleichrichtervorrichtung den einphasigen Ladevorgang übernehmen soll, indem die erste Gleichrichtervorrichtung inaktiv geschaltet wird und ein Schalter, der bevorzugt als Relais oder Halbleiterschalter realisiert ist, geschlossen wird, um die erste Anschlussleitung mit der entsprechenden zweiten Gleichrichtervorrichtung zu verbinden.

Wenn der konkrete Ladebetrieb anhand von Spannungsmesswerten der Anschlussleitungen entschieden werden soll, ist es zudem zweckmäßig, wenn jeder Anschlussleitung eine Messdaten an die Steuereinrichtung übermittelnde Spannungsmesseinrichtung, die die Spannung an der Anschlussleitung misst, zugeordnet ist. Übliche Spannungsmessgeräte können hier eingesetzt werden.

Es sei an dieser Stelle noch angemerkt, dass die Ladevorrichtung ganz oder teilweise in einem Kraftfahrzeug realisiert werden kann, mithin ein Kraftfahrzeug die Ladevorrichtung insbesondere auch vollständig umfassen kann.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine erfindungsgemäße Ladevorrichtung, und
- Fig. 2: eine Prinzipskizze eines Kraftfahrzeugs.

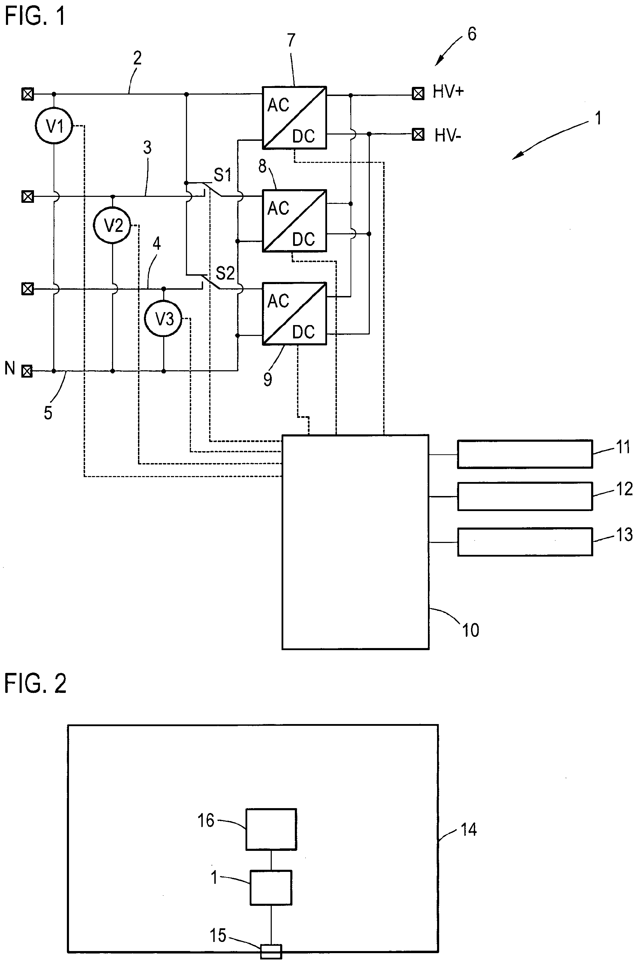

Fig. 1 zeigt eine funktionale Schaltskizze einer erfindungsgemäßen Ladevorrichtung 1. Es sei bereits vorab angemerkt, dass die hier gezeigten Komponenten in einem gemeinsamen Gehäuse vorgesehen sein können, wobei es aber auch denkbar ist, die Module für die einzelnen Phasen als einzelne Baueinheiten vorzusehen.

Die vorliegende Ladevorrichtung 1 ist zum dreiphasigen Laden ausgebildet, das bedeutet, sie weist drei Anschlussleitungen 2, 3, 4 für die verschiedenen Phasen auf sowie einen auf Masse liegenden Neutralleiter 5 auf. Als Ausgang liefert die Ladevorrichtung 1 an den Anschlüssen 6 eine Hochvolt-Gleichspannung als Ladespannung für einen hier nicht näher dargestellten elektrischen Energiespeicher eines Kraftfahrzeugs. Um die Ladespannung aus den entsprechenden Wechselstrom-Eingangsspannungen zu erzeugen, ist für jede Phase eine Gleichrichtervorrichtung 7, 8, 9 vorgesehen, die neben einem Gleichrichter mit wenigstens einer Gleichrichterstufe auch andere Komponenten umfassen kann, beispielsweise Filter und dergleichen. Wird die Ladevorrichtung 1 an eine elektrische Leistung, insbesondere also ein Netz, angeschlossen, in dem nur eine einphasige Wechselspannung vorliegt, kann sie dennoch zum Laden des Energiespeichers genutzt werden, wie im Folgenden näher dargelegt werden soll.

Beim Anschluss an nur eine Phase liegt die Spannung an der ersten Anschlussleitung 2 an, die, wie ersichtlich, unmittelbar mit der ersten Gleichrichtervorrichtung 7 verbunden ist. Jedoch ist auch eine Schaltvorrichtung vorgesehen, die die Schalter S1 und S2 umfasst. Über die Schalter S1, S2 lassen sich die jeweiligen zweiten Gleichrichtervorrichtungen 8, 9 wahlweise mit den ihnen zugeordneten zweiten Anschlussleitungen 3, 4 oder mit der ersten Anschlussleitung 2 verbinden. Auf diese Weise wird es mithin ermöglicht, die erste Anschlussleitung 2 auch mit den zweiten Gleichrichtervorrichtungen 8, 9 zu verbinden, die nicht die erste Gleichrichtervorrichtung 7 sind.

Um zu erkennen, ob ein einphasiges Laden oder ein mehrphasiges, hier dreiphasiges, Laden vorgenommen werden soll, sind ferner Spannungsmesseinrichtungen V1, V2 und V3 vorhanden, die die Spannungen an den jeweiligen Anschlussleitungen 2, 3, 4 messen. Liegt nur an der ersten Anschlussleitung 2 eine Spannung vor, wird ein einphasiges Laden durchgeführt, liegt an allen drei Anschlussleitungen 2, 3, 4 eine Spannung vor, wird ein dreiphasiges Laden durchgeführt. Gesteuert wird der Betrieb der Ladevorrichtung 1 von einer Steuereinrichtung 10, die neben den Gleichrichtervorrichtungen 7, 8, 9 auch die Schalter S1 und S2 ansteuern kann sowie von den Spannungsmesseinrichtungen V1, V2 und V3 Daten erhält. Die Steuereinrichtung 10 ist zur Durchführung des erfindungsgemäßen Verfahrens ausgebildet, weswegen ihr ferner drei Zählvorrichtungen 11, 12 und 13 zugeordnet sind. Dabei misst die Zählvorrichtung 11 die Nutzung der ersten Gleichrichtervorrichtung 7, die Zählvorrichtung 12 die Nutzung der zweiten Gleichrichtervorrichtung 8 und die Zählvorrichtung 13 die Nutzung der zweiten Gleichrichtervorrichtung 9. Die Zählvorrichtungen 11, 12, 13 können die elektrische Arbeit der Gleichrichtervorrichtung 7, 8, 9 erfassen (Wattstundenzähler) oder aber die Betriebsdauer (Betriebsstundenzähler).

Stellt die Steuereinrichtung 10 aufgrund der Messergebnisse der Spannungsmesseinrichtungen V1, V2 und V3 fest, dass ein einphasiges Laden ansteht, werden in den Zählvorrichtungen 11, 12, 13 abgelegte, die Nutzung der Gleichrichtervorrichtungen 7, 8, 9 beschreibende Nutzungsgrößen abgerufen und dahingehend ausgewertet, welche Gleichrichtervorrichtung 7, 8, 9 bislang am wenigsten genutzt wurde, insbesondere also, welche Nutzungsgröße die niedrigste ist. Ist es die erste Gleichrichtervorrichtung 7, werden die Schalter S1 und S2 nicht betätigt und die Gleichrichtervorrichtung 7 wird aktiviert und genutzt. Ist es eine der zweiten Gleichrichtervorrichtungen 8, 9, wird die erste Gleichrichtervorrichtung 7 deaktiviert, der entsprechende Schalter S1, S2 geschlossen und die entsprechende zweite Gleichrichtervorrichtung 8, 9 aktiviert und genutzt. Auf diese Weise wird erreicht, dass sich die Nutzung beim einphasigen Laden gleichmäßig auf die verschiedenen Gleichrichtervorrichtungen 7, 8, 9 verteilt.

Die Schalter S1, S2 sind vorliegend als Relais ausgebildet, jedoch ist es auch denkbar, Halbleiterschalter zu verwenden. Es ist grundsätzlich denkbar, weitere Funktionen, beispielsweise die einer Gleichrichterstufe oder eines Leistungsfaktorkorrekturfilters, in derartige Schalter zu integrieren.

Es sei zudem darauf hingewiesen, dass sich das hier dargestellte Konzept selbstverständlich auch beim zweiphasigen Laden mit einer für dreiphasiges Laden ausgebildeten Ladevorrichtung 1 einsetzen lässt, wobei die Schaltvorrichtung entsprechend anzupassen ist, was für den Fachmann jedoch leicht ersichtlich ist.

Fig. 2 stellt schematisch einen Fall dar, in dem die Ladevorrichtung 1 in ein Kraftfahrzeug 14 integriert ist, so dass die Ladevorrichtung 1 zu einer Seite hin mit einem Hochspannungsanschluss 15 des Kraftfahrzeugs 14 verbunden ist, zur anderen Seite mit einem elektrischen Energiespeicher 16 des Kraftfahrzeugs 14, hier einer Hochspannungs-Batterie, der über die Ladevorrichtung 1 zu laden ist. Es sind auch Ausgestaltungen denkbar, in denen die Ladevorrichtung 1 nur teilweise in das Kraftfahrzeug 14 integriert ist oder gar als externe Vorrichtung, beispielsweise als eine Ladesäule oder dergleichen, realisiert ist.

## Patentansprüche

1. Verfahren zum Betrieb einer Ladevorrichtung (1) eines elektrischen Energiespeichers (16) für ein Kraftfahrzeug (14), wobei beim mehrphasigen Laden durch die Ladevorrichtung (1) für jede Phase eine Gleichrichtervorrichtung (7, 8, 9) zur Erzeugung einer Ladespannung für den Energiespeicher (16) eingesetzt wird und beim einphasigen Laden durch die Ladevorrichtung (1) nur eine Gleichrichtervorrichtung (7, 8, 9) aktiv ist,
**dadurch gekennzeichnet,**
**dass** für jede Gleichrichtervorrichtung (7, 8, 9) eine deren bisherige Nutzung beschreibende Nutzungsgröße ermittelt wird, wobei bei einem einphasigen Ladevorgang die bislang am wenigstens genutzte Gleichrichtervorrichtung (7, 8, 9) für den Ladevorgang genutzt wird.

2. Verfahren nach Anspruch 1,
**dadurch gekennzeichnet,**
**dass** eine mit einer für das einphasige Laden genutzten ersten Anschlussleitung (2) verbundene erste Gleichrichtervorrichtung (7) und eine Schaltvorrichtung zum bedarfsweisen Verbinden der wenigstens einen zweiten, nicht der ersten Gleichrichtervorrichtung (7) entsprechenden Gleichrichtervorrichtung (8, 9) mit der ersten Anschlussleitung (2) verwendet werden, wobei zu Beginn jedes Ladevorgangs bei einer am wenigstens genutzten zweiten Gleichrichtervorrichtung (8, 9) ein die zweite Gleichrichtervorrichtung (8, 9) mit der ersten Anschlussleitung (2) verbindender Schalter (S1, S2) der Schaltvorrichtung geschlossen wird und die erste Gleichrichtervorrichtung (7) deaktiviert wird.

3. Verfahren nach Anspruch 2,
**dadurch gekennzeichnet,**
**dass** als Schalter (S1, S2) ein Relais oder ein Halbleiterschalter verwendet wird.

4. Verfahren nach einem der vorangehenden Ansprüche,
**dadurch gekennzeichnet,**
**dass** zur Unterscheidung zwischen einem einphasigen und einem mehrphasigen Laden an allen Anschlussleitungen (2, 3, 4) eine Spannungsmessung vorgenommen wird.

5. Verfahren nach einem der vorangehenden Ansprüche,
**dadurch gekennzeichnet,**
**dass** als Nutzungsgröße eine Betriebsdauer oder eine bislang verrichtete Arbeit der Gleichrichtervorrichtung (7, 8, 9) erfasst wird.

6. Verfahren nach einem der vorangehenden Ansprüche,
**dadurch gekennzeichnet,**
**dass** bei einer für dreiphasiges Laden ausgebildeten Ladevorrichtung (1) bei einem zweiphasigen Laden die zwei die bislang niedrigste Nutzung anzeigende Nutzungsgröße aufweisenden Gleichrichtervorrichtungen (7, 8, 9) für den Ladevorgang genutzt werden.

7. Ladevorrichtung (1) für einen Energiespeicher (16) eines Kraftfahrzeugs (14), die eine Steuereinrichtung (10) und für jede einer Phase zugeordnete Anschlussleitung (2, 3, 4) eine Gleichrichtervorrichtung (7, 8, 9) zur Erzeugung einer Ladespannung für den Energiespeicher (16) aufweist, wobei eine erste Anschlussleitung (2), die mit einer ersten Gleichrichtervorrichtung (7) verbunden ist, beim einphasigen Laden nutzbar ist,
**dadurch gekennzeichnet,**
**dass** die Ladevorrichtung (1) für jede Gleichrichtervorrichtung (7, 8, 9) eine Zähleinrichtung (11, 12, 13) für eine deren bisherige Nutzung beschreibende Nutzungsgröße aufweist, wobei die Steuereinrichtung (10) bei einem einphasigen Ladevorgang zur Nutzung der gemäß der Inhalte der Zähleinrichtungen (11, 12, 13) bislang am wenigstens genutzte Gleichrichtervorrichtung (7, 8, 9) für den Ladevorgang ausgebildet ist.

8. Ladevorrichtung nach Anspruch 7,
**dadurch gekennzeichnet,**
**dass** eine durch die Steuereinrichtung (10) ansteuerbare Schaltvorrichtung zum bedarfsweisen Verbinden der wenigstens einen zweiten, nicht der ersten Gleichrichtervorrichtung (7) entsprechenden Gleichrichtervorrichtung (8, 9) mit der ersten Anschlussleitung (2) vorgesehen ist.

9. Ladevorrichtung nach Anspruch 8,
**dadurch gekennzeichnet,**
**dass** wenigstens ein Schalter (S1, S2) der Schaltvorrichtung als ein Relais oder Halbleiterschalter ausgebildet ist.

10. Ladevorrichtung nach einem der Ansprüche 7 bis 9,
**dadurch gekennzeichnet,**
**dass** jeder Anschlussleitung (2, 3, 4) eine Messdaten an die Steuereinrichtung (10) übermittelnde Spannungsmesseinrichtung (V1, V2, V3) zugeordnet ist.

## Claims

1. Method for operating a charging device (1) of an energy store (16) for a motor vehicle (14), wherein one rectifier device (7, 8, 9) for each phase is used for generating a charging voltage for the energy store (16) during multiphase charging by the charging device (1), and only one rectifier device (7, 8, 9) is active during single-phase charging by the charging device (1),
**characterised in that**,
for each rectifier device (7, 8, 9), a usage quantity describing its previous use is determined, wherein the rectifier device (7, 8, 9) hitherto used least is used for the charging process in the case of a single-phase charging process.

2. Method according to Claim 1,
**characterised in that**
a first rectifier device (7) connected to a first connecting line (2) used for the single-phase charging, and a switching device for connecting, when necessary, the at least one second rectifier device (8, 9), not corresponding to the first rectifier device (7), to the first connecting line (2) is used, wherein, at the start of each charging process, in the case of a second rectifier device (8, 9) having been used least, a switch (S1, S2) connecting the second rectifier device (8, 9) to the first connecting line (2) of the switching device is closed and the first rectifier device (7) is deactivated.

3. Method according to Claim 2,
**characterised in that**
a relay or a semiconductor switch is used as the switch (S1, S2).

4. Method according to any one of the preceding claims,
**characterised in that** a voltage measurement is carried out on all the connecting lines (2, 3, 4) in order to differentiate between single-phase charging and multiphase charging.

5. Method according to any one of the preceding claims,
**characterised in that**
an operating time of, or work performed so far by the rectifier device (7, 8, 9) is detected as a usage quantity.

6. Method according to any one of the preceding claims,
**characterised in that**,
in the case of a charging device (1) configured for three-phase charging, for two-phase charging the two rectifier devices (7, 8, 9) having the usage quantities indicating the least use so far are used for the charging process.

7. Charging device (1) for an energy store (16) of a motor vehicle (14), which comprises a control instrument (10) and, for each connecting line (2, 3, 4) assigned to a phase, a rectifier device (7, 8, 9) for generating a charging voltage for the energy store (16), wherein a first connecting line (2), which is connected to a first rectifier device (7), can be used for single-phase charging,
**characterised in that**
the charging device (1) comprises, for each rectifier device (7, 8, 9), a metering instrument (11, 12, 13) for a usage quantity describing previous use, wherein the control instrument (10) is configured, in the case of a single-phase charging process, to use the rectifier device (7, 8, 9) used least so far according to the contents of the metering instruments (11, 12, 13) for the charging process.

8. Charging device according to Claim 7,
**characterised in that**
a switching device which can be driven by the control instrument (10) is provided for connecting, when necessary, the at least one second rectifier device (8, 9), not corresponding to the first rectifier device (7), to the first connecting line (2).

9. Charging device according to Claim 8,
**characterised in that** at least one switch (S1, S2) of the switching device is configured as a relay or semiconductor switch.

10. Charging device according to any one of Claims 7 to 9,
**characterised in that**
each connecting line (2, 3,4) is assigned a voltage measuring instrument (V1, V2, V3) transmitting measurement data to the control instrument (10).

## Revendications

1. Procédé pour le fonctionnement d'un dispositif de charge (1) d'un accumulateur d'énergie (16) électrique pour un véhicule automobile (14), lors de la charge polyphasée par le dispositif de charge (1), un dispositif redresseur (7, 8, 9) étant utilisé pour chaque phase afin de produire une tension de charge pour l'accumulateur d'énergie (16) et, lors de la charge monophasée par le dispositif de charge (1), un seul dispositif redresseur (7, 8, 9) étant actif,
**caractérisé en ce**
**que**, pour chaque dispositif redresseur (7, 8, 9), on détermine une grandeur d'utilisation décrivant l'utilisation de celui-ci jusqu'à présent, le dispositif redresseur (7, 8, 9) qui a été le moins utilisé jusqu'à présent étant utilisé pour l'opération de charge lors d'une opération de charge monophasée.

2. Procédé selon la revendication 1,
**caractérisé en ce**
**que** l'on utilise un premier dispositif redresseur (7) relié à une première ligne de raccordement (2) utilisée pour la charge monophasée et un dispositif de commutation servant à relier, selon les besoins, l'au moins un deuxième dispositif redresseur (8, 9) ne correspondant pas au premier dispositif redresseur (7) à la première ligne de raccordement (2), un commutateur (S1, S2), reliant le deuxième dispositif redresseur (8, 9) à la première ligne de raccordement (2), du dispositif de commutation étant fermé au début de chaque opération de charge, en présence d'un deuxième dispositif redresseur (8, 9) le moins utilisé et le premier dispositif redresseur (7) étant désactivé.

3. Procédé selon la revendication 2,
**caractérisé en ce**
**que** l'on utilise comme commutateur (S1, S2) un relais ou un commutateur à semi-conducteurs.

4. Procédé selon l'une quelconque des revendications précédentes,
**caractérisé en ce**
**que**, pour distinguer une charge monophasée et une charge polyphasée, on effectue une mesure de tension sur toutes les lignes de raccordement (2, 3, 4).

5. Procédé selon l'une quelconque des revendications précédentes,
**caractérisé en ce**
**que** l'on détecte comme grandeur d'utilisation une durée de fonctionnement ou un travail accompli jusqu'à présent du dispositif redresseur (7, 8, 9).

6. Procédé selon l'une quelconque des revendications précédentes,
**caractérisé en ce**
**que**, dans le cas d'un dispositif de charge (1) réalisé pour une charge triphasée, on utilise, pour l'opération de charge, lors d'une charge biphasée, les deux dispositifs redresseurs (7, 8, 9) présentant la grandeur d'utilisation indiquant l'utilisation la plus faible jusqu'à présent.

7. Dispositif de charge (1) pour un accumulateur d'énergie (16) d'un véhicule automobile (14), qui présente un système de commande (10) et, pour chaque ligne de raccordement (2, 3, 4) associée à une phase, un dispositif redresseur (7, 8, 9) aux fins de la production d'une tension de charge pour l'accumulateur d'énergie (16), une première ligne de raccordement (2) qui est reliée à un premier dispositif redresseur (7) étant utilisable lors de la charge monophasée,
**caractérisé en ce**
**que** le dispositif de charge (1) présente pour chaque dispositif redresseur (7, 8, 9) un compteur (11, 12, 13) pour une grandeur d'utilisation décrivant l'utilisation de celui-ci jusqu'à présent, le système de commande (10) lors d'une opération de charge monophasée étant réalisé aux fins de l'utilisation du dispositif redresseur (7, 8, 9) le moins utilisé jusqu'à présent selon les contenus des compteurs (11, 12, 13) pour l'opération de charge.

8. Dispositif de charge selon la revendication 7,
**caractérisé en ce**
**qu'**un dispositif de commutation commandable par le système de commande (10) est prévu afin de relier, selon les besoins, l'au moins un deuxième dispositif redresseur (8, 9) ne correspondant pas au premier dispositif redresseur (7) à la première ligne de raccordement (2).

9. Dispositif de charge selon la revendication 8,
**caractérisé en ce**
**que** l'au moins un commutateur (S1, S2) du dispositif de commutation est réalisé sous la forme d'un relais ou d'un commutateur à semi-conducteurs.

10. Dispositif de charge selon l'une quelconque des revendications 7 à 9,
**caractérisé en ce**
**qu'**un système de mesure de tension (V1, V2, V3) transmettant des données de mesure au système de commande (10) est associé à chaque ligne de raccordement (2, 3,4).
